# EUROPEAN PATENT SPECIFICATION

(11) **EP 0 928 709 B1**
(45) Date of publication and mention of the grant of the patent: **06.11.2002**
(21) Application number: 99100241.1
(22) Date of filing: 08.01.1999
(51) Int. Cl.: B60H 1/32, F28F 9/00, F28D 1/04

(54) **A heat-exchanger assembly for a vehicle, including a radiator with a dehydrating filter**
Wärmeaustauschervorrichtung für ein Fahrzeug, enthaltend einen Radiator mit Trocknungsfilter
Ensemble échangeur de chaleur pour un véhicule, comprenant un radiateur avec un filtre déshydrateur

(30) Priority: 12.01.1998 IT TO980017
(43) Date of publication of application: 14.07.1999
(73) Proprietor: DENSO THERMAL SYSTEMS S.p.A., 10046 Poirino (Torino) (IT)
(72) Inventor: Lazzaro, Maurizio, 10151 Torino (IT)
(74) Representative: Marchitelli, Mauro

(56) References cited:
- EP-A- 0 611 940
- US-A- 4 997 033
- US-A- 5 344 112
- US-A- 5 582 027
- US-A- 5 704 418

## Description

The present invention relates to a heat-exchange assembly for a vehicle, including:
- a radiator with a manifold which includes a tank moulded from plastics material and
- a condenser arranged to face the radiator, the condenser forming part of an air-conditioning system for a vehicle which includes a dehydrating filter connected in series to the condenser.

The object of the present invention is to solve the problem of installing the dehydrating filter in the engine compartment of the vehicle. The dehydrating filter is usually fixed to the vehicle by means of a metal bracket. This arrangement makes it necessary to possess a certain number of tools for mounting the dehydrating filter and involves an extra assembly operation. The location of the filter in the engine compartment often causes problems of space, besides the inconvenience caused by the relatively long tubes required to connect the filter to the other members of the air-conditioning system of the vehicle.

In order to solve the aforesaid problems, the object of the present invention is to provide a heat-exchange assembly of the type specified above, characterised in that the radiator tank has a support element, formed integrally with the tank, to which the dehydrating filter is fixed.

This arrangement enables the metal bracket for supporting the filter to be eliminated since the support is formed during the moulding of the radiator tank, with no need for additional operations. This leads to a reduction in costs and in the number of parts which need to be mounted, thereby simplifying assembly operations.

Further characteristics and advantages of the present invention will become apparent from the detailed description which follows, provided purely by way of non-limitative example, with reference to the appended drawings, in which:
Figure 1 is a schematic perspective view of a heat-exchanger assembly according to the present invention, and
Figures 2 and 3 are schematic perspective views of the parts indicated by the arrows II and III of Figure 1.

With reference to the drawings, a heat-exchanger assembly is indicated 10 which includes a radiator 12 and a condenser 14, arranged facing each other. The radiator 12 forms part of the cooling system of an internal combustion engine (not shown) while the condenser 14 forms part of an air-conditioning system which includes, in known manner, a compressor, an evaporator and an expansion valve (not shown). The air-conditioning system also includes a dehydrating filter 16 connected to the inlet or outlet of the condenser 14 by a tube 18. The heat-exchanger assembly 10 also includes a frame 20 of plastics material for supporting an electric fan 22 and for guiding the air flow generated by the fan.

The condenser 14 may be of any type on the market. The condenser 14 shown in the drawings is a parallel-tube type with two tubular distributors 24 (only one of which is visible in the drawings).

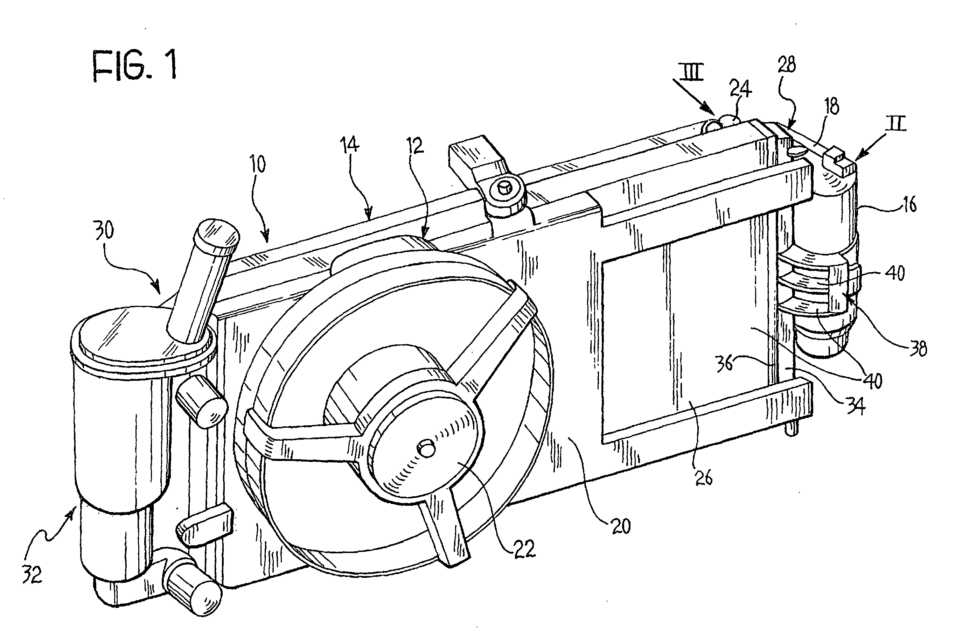

The radiator 12 has a heat-exchange matrix 26 and a pair of manifolds 28, 30. The heat exchange matrix 26 can be constructed in various ways, consisting, for example, of a plurality of tubes, arranged in one or more rows, fixed to a pack of blade-like fins. In a known manner, the manifold indicated 30 (on the left in Figure 1) may have an integral expansion chamber 32.

The manifold 28 of the radiator 12 (on the right in Figure 1) includes a tank of plastics material 34 fixed to a base plate 36 to which the ends of the tubes are fixed.

According to the present invention, the dehydrating filter 16 is fixed to a support element 38 moulded in one piece with the tank 34.

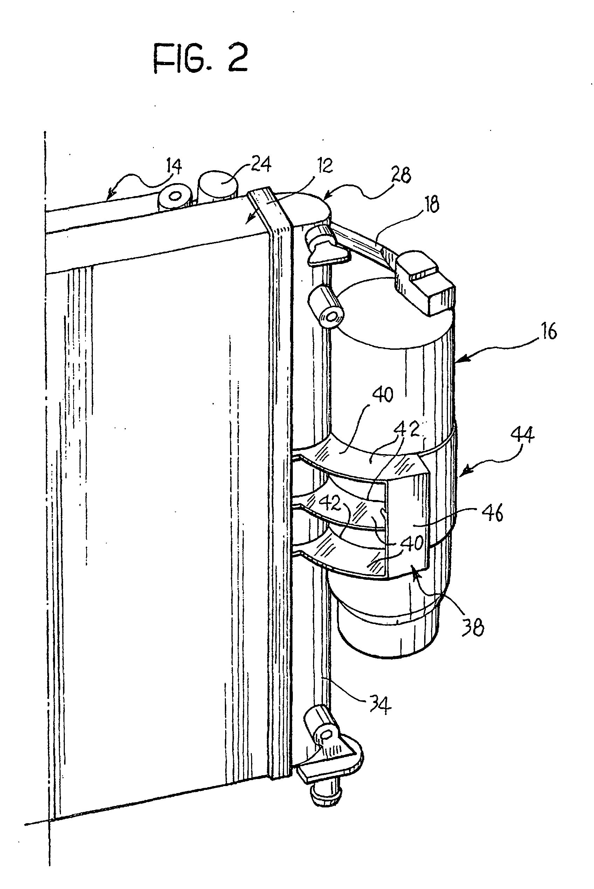

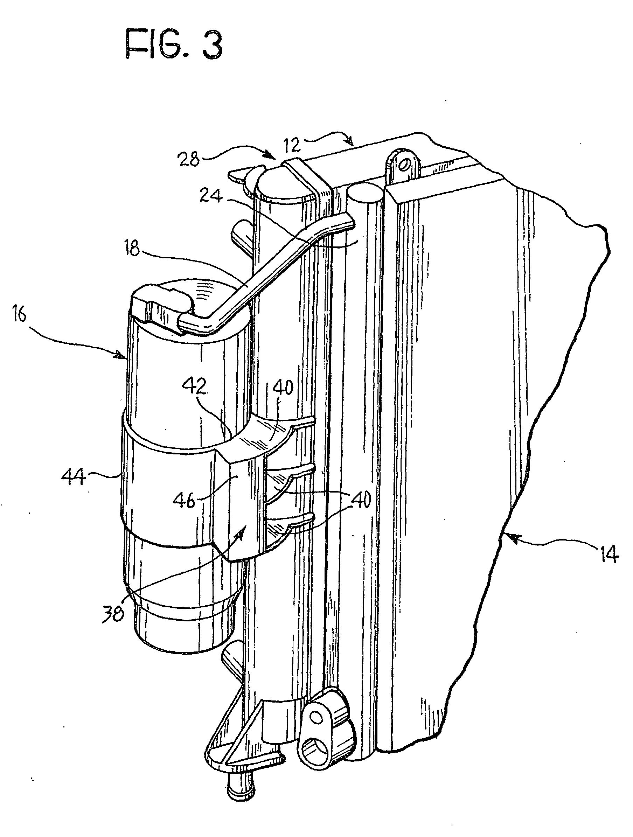

As may be seen in greater detail in Figures 2 and 3, the support element 38 is constituted by a series of parallel, flat ribs 40 (three in the example illustrated) integrally formed on the external surface of the tank 34. The ribs 40 have respective curved edges 42 which together form a generally cradle-shape base against which the cylindrical body of the filter 16 is held. The radius of curvature of the curved edges 42 is substantially the same as the radius of the outer cylindrical surface of the filter 16. A band 44, made, for example, of plastics material, is provided to hold the filter 16 against the support element 38, the said band being fixed at each end to thickened end portions 46 joining the flattened ribs 40 of the support element 38. The band 44 may be fixed to the support element 38 either with screws on by providing the band 44 and the support element 38 with engagement means, or a snap-engagement or any other type.

Positioning the filter 16 on the tank 34 of the radiator reduces to a minimum the distance of the said filter 16 from the condenser 14, thereby reducing the length and bulk of the connector tubes. The fact that the support element 38 is formed in one piece with the tank 34 eliminates a part and simplifies assembly operations. The arrangement of the invention means that it is not necessary to fit an extra bracket. In addition, the dehydrating filter 16 can be preassembled on the heat-exchange assembly before the latter is fitted into the vehicle.

## Claims

1. A heat-exchanger assembly for a vehicle, which includes:
- a radiator (12) with a manifold (28) including a tank (34), moulded from plastics material, and
- a condenser (14) arranged facing the radiator (12), the condenser (14) forming part of an air-conditioning system for the vehicle which includes a dehydrating filter (16) connected in series with the condenser (14),
**characterised in that** the said tank (34) of the radiator (12) has a support element (38) formed in one piece with the tank (34) and to which the said dehydrating filter (16) is fixed.

2. A heat-exchanger assembly according to Claim 1, **characterised in that** the said support element (38) has a plurality of flat ribs (40) formed integrally with the tank (34) and having respective curved edges forming a support base for a cylindrical surface of the dehydrating filter (16).

3. A heat-exchanger assembly according to Claim 2, **characterised in that** the dehydrating filter (16) is fitted to the said support element (38) by a band (44) fixed to thickened end portions (46) of the said support element (38).

## Patentansprüche

1. Eine Wärmetauscher-Vorrichtung für ein Fahrzeug, enthaltend:
- einen Radiator (12) mit einem Verteiler (28), der einen Behälter (34) enthält und aus Kunststoff gefertigt ist, und
- einen Kondensator (14), der dem Radiator (12) zugewandt ist, wobei der Kondensator (14) Teil einer Klimaanlage des Fahrzeugs ist, die einen mit dem Kondensator (14) in Reihe angeordneten Trocknungsfilter (16) beinhaltet,
**dadurch gekennzeichnet, dass** der Behälter (34) des Radiators (12) ein Tragelement (38) aufweist, das in einem Stück mit dem Behälter (34) geformt ist, und an dem der Trocknungsfilter (16) befestigt ist.

2. Eine Wärmetauscher-Vorrichtung gemäß Anspruch 1, **dadurch gekennzeichnet, dass** das Tragelement (38) eine Vielzahl flacher Rippen (40) aufweist, die als Einheit mit dem Behälter (34) geformt sind und entsprechend gekrümmte Kanten aufweisen, die eine Tragebasis fiir eine zylindrische Oberfläche des Trocknungsfilters (16) bilden.

3. Eine Wärmetauscher-Vorrichtung gemäß Anspruch 2, **dadurch gekennzeichnet, dass** der Trocknungsfilter (16) mithilfe eines Bandes (44) im Tragelement (38) eingesetzt wird, das an verstärkten Endabschnitten (46) des Tragelements (38) befestigt ist.

## Revendications

1. Ensemble à échangeur de chaleur destiné à un véhicule, qui comprend :
un radiateur (12) ayant un collecteur (28) qui comprend une cuve (34) de matière plastique moulée, et
un condenseur (14) disposé afin qu'il soit tourné vers le radiateur (12), le condenseur (14) faisant partie d'un système de conditionnement d'air de véhicule qui comprend un filtre (16) de déshydratation raccordé en série avec le condenseur (14),
**caractérisé en ce que** la cuve (34) du radiateur (12) possède un élément de support (38) formé en une seule pièce avec la cuve (34) et auquel est fixé le filtre de déshydratation (16).

2. Ensemble à échangeur de chaleur selon la revendication 1, **caractérisé en ce que** l'élément de support (38) a plusieurs nervures plates (40) formées solidairement avec la cuve (34) et ayant des bords courbes respectifs formant une base de support d'une surface cylindrique du filtre de déshydratation (16).

3. Ensemble à échangeur de chaleur selon la revendication 2, **caractérisé en ce que** le filtre de déshydratation (16) est monté sur l'élément de support (38) par une bande (44) fixée à des parties épaissies d'extrémité (46) de l'élément de support (38).
